# EUROPEAN PATENT APPLICATION

(11) **EP 4 687 119 A1**
(43) Date of publication of application: **04.02.2026**
(21) Application number: 25192699.4
(22) Date of filing: 30.07.2025
(51) Int. Cl.: G06V 10/82, B60W 50/14, G06V 20/52, G06V 20/56

(54) **METHOD FOR VEHICLE WARNING AND CORRESPONDING SYSTEM**

(30) Priority: 01.08.2024 CN 202411054795
(71) Applicant: Cariad (China) Co., Ltd., Beijing 100028 (CN)
(72) Inventor: ZHAO, Xiaoyang, Beijing, 100028 (CN); DUAN, Ning, Beijing, 100028 (CN); ZHANG, Chao, Beijing, 100028 (CN); YAO, Renjie, Beijing, 100028 (CN)
(74) Representative: Müller-Boré & Partner Patentanwälte PartG mbB

(57) **Abstract**

The present invention provides a system and system for vehicle warning. The method comprises: acquiring an image of the surrounding of a vehicle; detecting a marker feature from the acquired image; analyzing the marker feature to determine whether the vehicle has entered a risk area; and sending a safety reminder message to the vehicle or a vehicle occupant when it is determined that the vehicle has entered the risk area. According to the solution of the present invention, it is possible to implement the determination as to whether the vehicle enters the risk area such as an energy replenish station by detecting and analyzing the marker feature in the image of the surrounding of the vehicle, and send a safety reminder message to the vehicle or the vehicle occupant, to avoid potential risk accidents, thereby improving the safety of the vehicle occupant and the environment where he is located.

## Description

### FIELD

The present invention relates to the field of vehicle warning, and more specifically to a method for vehicle warning, a system for vehicle warning and a vehicle comprising the same, a corresponding computer device and a computer readable storage medium.

### BACKGROUND

When a vehicle pulls into a risk area such as an energy replenishment station, more attention needs to be paid to safe driving of the vehicle or a safety status of the environment where the vehicle is located, to prevent a potential risk, failure or accident such as a replenished energy leak, fire or explosion from occurring in the risk area due to an improper operation of the vehicle or a vehicle occupant. In addition, where there is an explosive, flammable or toxic gas in the environment where the vehicle is located, it is necessary to remind the vehicle or the vehicle occupant to avoid dangerous conditions such as the fire, explosion or poisoning caused by the improper operation of the vehicle or occupant in the vehicle.

Therefore, it is necessary to provide a corresponding solution for vehicle warning.

### SUMMARY

In order to solve at least the above technical problems, the present invention provides a method for vehicle warning, a system for vehicle warning and a vehicle comprising the same, a corresponding computer device and a computer readable storage medium.

According to a first aspect of the present invention, a method for vehicle warning is provided, the method comprises: acquiring an image of the surrounding of a vehicle; detecting a marker feature from the acquired image; analyzing the marker feature to determine whether the vehicle has entered a risk area; and sending a safety reminder message to the vehicle or a vehicle occupant when it is determined that the vehicle has entered the risk area.

In one embodiment, the method further comprises acquiring other environmental information around the vehicle, the other environmental information including a target gas concentration, a sound volume, a temperature, or a humidity around the vehicle.

In one embodiment, the method further comprises: comparing the other environmental information with a corresponding threshold; and in response to the other environmental information being greater than the corresponding threshold, activating a first acquisition module to acquire the image of the surrounding of the vehicle such that the detection of the marker feature from the acquired image is next performed.

In one embodiment, the marker feature comprises a size of a marker characterizing a risk in the image, and the method further comprises: determining that the vehicle is traveling close to the risk area when a proportion of the detected marker feature in the acquired image becomes gradually larger but has not exceeded a preset threshold; and determining that the vehicle has entered the risk area when the proportion of the detected marker feature in the acquired image exceeds the preset threshold.

In one embodiment, the risk area comprises an energy replenishment station, a chemical storage area or a high-voltage area, and the marker feature comprises an energy replenishment station marker feature, a chemical marker feature or a high-voltage marker feature.

In one embodiment, the safety reminder message comprises reminding the vehicle or the vehicle occupant to avoid occurrence of a fire source and static electricity, avoid using a mobile phone, close windows and/or shut down an engine if necessary.

According to a second aspect of the present invention, a system for vehicle warning is provided, the system comprises: a first acquisition module configured to acquire an image of the surrounding of a vehicle; a detection module configured to detect a marker feature from the acquired image; a first determination module configured to analyze the marker feature to determine whether the vehicle has entered a risk area; and a control module configured to send a safety reminder message to the vehicle or a vehicle occupant when it is determined that the vehicle has entered the risk area.

In one embodiment, the system further comprises a second acquisition module configured to acquire other environmental information around the vehicle, and the other environmental information includes a target gas concentration, a sound volume, a temperature, or a humidity around the vehicle.

In one embodiment, the system further comprises a second determination module configured to: compare the other environmental information with a corresponding threshold; and in response to the other environmental information being greater than the corresponding threshold, activate the first acquisition module to acquire the image of the surrounding of the vehicle such that the detection module next performs the detection of marker feature from the acquired image.

In one embodiment, the marker feature comprises a size of a marker characterizing a risk in the image. And the first determination module is further configured to: determine that the vehicle is traveling close to the risk area when a proportion of a size of the detected marker feature in the acquired image becomes gradually larger but has not exceeded a preset threshold; and determine that the vehicle has entered the risk area when the proportion of the size of the detected marker feature in the acquired image exceeds the preset threshold.

According to a third aspect of the present invention, a vehicle is provided, comprising the system for vehicle warning described above.

According to a fourth aspect of the present invention, a computer device is provided, comprising a memory and a processor, the memory having stored thereon computer instructions which, when executed by the processor, cause the method for vehicle warning according to any of the above implementations to be executed.

According to a fifth aspect of the present invention, a non-transitory computer-readable storage medium is provided, on which a computer program is stored, wherein the computer program, when executed by a processor, causes cause the method for vehicle warning according to any of the above implementations to be executed.

According to the solution of the present invention, whether the vehicle enters the risk area is determined by at least analyzing the marker feature detected from the image acquired from the surrounding of the vehicle. When the vehicle enters the risk area, a safety reminder message is sent to the vehicle or the vehicle occupant. Furthermore, in the present invention, other sensors may also be employed to acquire other environmental information around the vehicle such as a gas concentration, a sound volume, a temperature or a humidity, to assist or perform a risk prediction in advance. Advantageously, when the vehicle enters the risk area (e.g., an energy replenishment station such as a gas station or a charging station), the safety reminder message can be sent to the vehicle or the vehicle occupant in time so that the vehicle or the vehicle occupant notices the relevant potential risk and takes a necessary action, to avoid a potential risk fault or accident, thereby improving the safety of the vehicle occupant and the environment where he is located.

### BRIEF DESCRIPTION OF THE DRAWINGS

Non-limiting and non-exhaustive embodiments of the present invention will be described with reference to the following figures, wherein:
FIG. 1A illustrates a flow chart of a method for vehicle warning according to an embodiment of the present invention;
FIG. 1B illustrates a flow chart of a method for vehicle warning according to another embodiment of the present invention;
FIG. 2 illustrates a flow chart of a method for vehicle warning according to an embodiment of the present invention;
FIG. 3A illustrates a block diagram of a system for vehicle warning according to an embodiment of the present invention;
FIG. 3B illustrates a block diagram of a system for vehicle warning according to another embodiment of the present invention.

Those skilled in the art will appreciate that elements in the figures are illustrated for the sake of simplicity and clarity and have not necessarily been drawn to scale. In addition, common but well-understood elements that are useful or necessary in a commercially feasible embodiment are often not depicted in order to facilitate a less obstructed view of these various embodiments of the present invention.

### DETAILED DESCRIPTION OF EMBODIMENTS

In the following description, numerous specific details are set forth in order to provide a thorough understanding of the present invention. It will be apparent, however, to one having ordinary skill in the art that the specific detail need not be employed to practice the present invention. In other instances, well-known methods have not been described in detail in order to avoid obscuring the present invention.

Reference throughout this specification to "one embodiment," "an embodiment," "one example," or "an example" means that a particular feature, structure or characteristic described in connection with the embodiment or example is included in at least one embodiment of the present invention, and they do not necessarily all refer to the same embodiment or example. Furthermore, the particular features, structures or characteristics may be combined in any suitable combinations and/or subcombinations in one or more embodiments or examples.

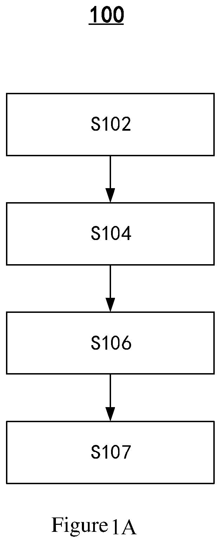

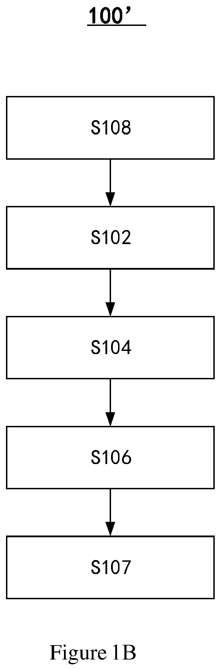

FIG. 1A illustrates a flow chart of a method 100 for vehicle warning according to an embodiment of the present invention; and FIG. 1B illustrates a flow chart of a method 100' for vehicle warning according to another embodiment of the present invention.

Referring to FIG. 1A, the method 100 comprises step S102, step S104, step S106 and step S107.

In step S102, an image of the surrounding of a vehicle is acquired. For example, the image of the surrounding of the vehicle may be acquired via a first acquisition module (e.g., an image sensor such as a camera mounted inside or outside the vehicle), for example, the image may comprise an image within an image-taking range of the camera in front of, behind, or on left side or right side of the vehicle.

In step S104, a marker feature is detected from the acquired image. The marker feature may at least comprise information such as a size, a pattern, a shape or a color of the marker characterizing the risk area.

In some embodiments, the risk area may comprise energy replenishment stations (e.g., gas stations, charging stations or LPG stations), chemical storage areas (e.g., chemical warehouses), high-voltage areas or other areas that might cause occurrence of dangers.

For example, when the risk area is the energy replenishment station (e.g., a gas station), the marker feature may comprise: a marker of the gas station typically comprises a large fuel pump icon or a graphic marker indicating the vehicle is being refueled; common markers of the gas stations further comprise a trademark of a petroleum company and corresponding significant colors; in addition, the marker of the gas station also has an eye-catching text marker such as "gas station".

For example, when the risk area is the LPG station, the marker feature may comprise the following: a marker of the LPG station typically has a icon of a gas cylinder or a chemical molecular model pattern of natural gas; the marker comprises words such as "LPG" or "Natural Ggas"; the marker also comprises a commonly-used warning color such as yellow or orange.

For example, when the risk area is a chemical warehouse, the marker feature may comprise the following: a logo of a harmful chemical, for example, a skull and crossbones, representing toxicity; a common-used warning color which is a black pattern against a yellow background; the marker might comprise waring words such as "danger" or "toxic".

As another example, when the risk area is a high-voltage area, the marker feature may comprise the following: the marker typically comprises a lightning bolt symbol indicating an electrical danger; the marker uses a warning yellow or orange background; the marker often has a text warning such as "high voltage", "danger" or "keep away".

It may be envisioned that in other areas that might cause occurrence of dangers, other corresponding marker features may be added so that recognition and analysis may be performed on the marker features of other risk areas.

In step S106, the marker feature is analyzed to determine whether the vehicle has already traveled into the risk area. Specifically, for example, image recognition and analysis may be performed on the marker feature. If it is determined that the marker feature belongs to an identifier corresponding to a designated risk area, it is believed that the vehicle has already entered the risk area. In one embodiment, entering the risk area may only be defined in a way that the vehicle has already entered the risk area; in another embodiment, entering the risk area may also be defined in a way that the vehicle is driving close to the risk area. For example, when the actual risk area has a significant physical boundary division, the vehicle in the divided boundary range may be understood in a way that the vehicle has already entered the risk area, and the approaching of the vehicle towards the divided boundary from outside may be understood in a way that the vehicle is driving close to the risk area. As another example, for some risk areas, for example, an area in which there is an energy transportation vehicle ahead, the area might not have a strict boundary. At this time, entering the risk area may be understood in a way that the vehicle is driving close to or has already entered the risk area. It should be appreciated that entering the risk area may be understood in a way that potential dangerous conditions might occur at this time.

In step S107, when the vehicle drives into the risk area, a safety reminder message is sent to the vehicle or its occupant. In one embodiment, the safety reminder message may be provided in a manner such as a vision manner, an auditory manner or a tactile manner.

In one embodiment, the method 100 may further comprise acquiring other environmental information around the vehicle. The other environmental information comprises a gas concentration, a sound volume, a temperature or a humidity around the vehicle. For example, the gas concentration, the sound volume, the temperature or the humidity around the vehicle may be acquired by a gas sensor (e.g., an odor sensor), a sound sensor, a temperature sensor and a humidity sensor, respectively.

As shown in FIG. 1B, in one embodiment, the method 100' may further comprise step S108 in addition to step S102, step S104, step S106 and step S107 shown in FIG. 1A. In step S108, the other environmental information is compared with a corresponding threshold; in response to the other environmental information being greater than the corresponding threshold, a first acquisition module is activated to acquire the image of the surrounding of the vehicle, and then the detection of the marker feature from the acquired image is performed. In other words, in one embodiment, as a precondition for activating the first acquisition module to acquire the image of the surrounding of the vehicle, only when one or more of the target gas concentration, sound volume, temperature and humidity is (are) greater than the corresponding threshold can the method described in detail in above step S102, step S104, step S106 and step S107 be performed. For example, one or more of the target gas concentration, sound volume, temperature and humidity around the vehicle is (are) greater than the corresponding threshold, the vehicle may be directly controlled to activate the first acquisition module mounted thereon to acquire the image of the surrounding of the vehicle or activate the first acquisition module to acquire the image of the surrounding of the vehicle while sending corresponding reminder message to the vehicle occupant.

In one embodiment, the method 100, method 100' or step S106 may further comprise: determining that the vehicle is driving close to the risk area when a proportion of a size of the detected marker in the image acquired in real time becomes gradually larger but has not exceeded a preset threshold; and determining that the vehicle has already entered the risk area when the proportion of the size of the detected marker in the image acquired in real time exceeds the preset threshold. The preset threshold may refer to a ratio of the size of the marker to the acquired image. The preset threshold may be flexibly set for different markers according to an actual size of the marker corresponding to a particular risk area.

In one embodiment, for the above-mentioned preset threshold of the proportion of the size of the marker in the image, an suitable preset threshold may be selected in consideration of the following three key factors: 1. an actual size of the marker feature: understanding physical dimensions of the marker feature may help set a reasonable threshold relative to a view angle of the first acquisition module (e.g., camera); 2. a resolution and a view angle of the first acquisition module (e.g., the camera): different first acquisition modules (e.g., cameras) might have different resolutions and view angle widths, and these factors all may affect the representation of the size of the marker in the acquired image; and 3. a type and size of the vehicle: vehicles with different sizes and types might stop at different distances, so a threshold range might need to be set to suit different types of vehicles. In consideration of the above three factors, the preset threshold may be for example in a range between 90% and 150%, wherein 90% represents that the marker is fully contained within the spatial boundary of the acquired image and the size of the marker (i.e., the overall area of the marker) occupies 90% of the area of the image acquired by the first acquisition module (e.g., the camera), and 150% represents that a portion (such as a critical portion, e.g., a central portion, of the marker) of the marker has completely covered the area of the image acquired by the first acquisition module, and that the ratio of the size of the marker (i.e., the overall area of the marker, including portions not represented in the image) to the area of the image acquired by the first acquisition module (e.g., the camera) is 150%. In one embodiment, the preset threshold may be set to, for example, 100%, 120%, or 125%, etc. based on the above three factors.

As described above, in one embodiment, the risk area may be an energy replenishment station, such as a gas station or a charging station, and the marker feature may be a marker feature of the energy replenishment station, such as an identification of the gas station or the charging station. In another embodiment, the safety reminder message may at least comprise reminding the vehicle or the vehicle occupant to avoid occurrence of a fire source and static electricity, avoid using a mobile phone (especially at a gas station), close windows and/or shut down an engine if necessary (e.g., shut down a fuel engine before refueling or shut down an electric motor before charging).

Specifically, because the energy replenishment station is a site with potential risks, there are some potential hazards and problems when the driver drives the vehicle to the energy replenishment station, and the driver needs to pay attention to the following exemplary matters:
- Regarding fire sources and static electricity: the energy supplement station is a flammable and explosive environment, so it should be kept away from any fire source, including a lit cigarette, an open flame, a lighter, etc.; static electricity might also cause a fire, so it should be ensured upon refueling that the driver leaves the vehicle and touches a metal part to eliminate the static electricity;
- Regarding the use of a mobile phone: since the electromagnetic radiation of the mobile phone might cause a fire, the mobile user tries not to use the mobile phone or answer a phone call or send a short message nearby the energy replenishment station particularly a gas station;
- Regarding shutdown of an engine: it should be ensured that the fuel engine of the vehicle has already been shut down before refuelling to avoid gasoline splashing or accidental start-up of the vehicle; or, it is ensured before charging that the motor of the vehicle has been shut down to avoid an electrical leak or accidental start-up of the vehicle.

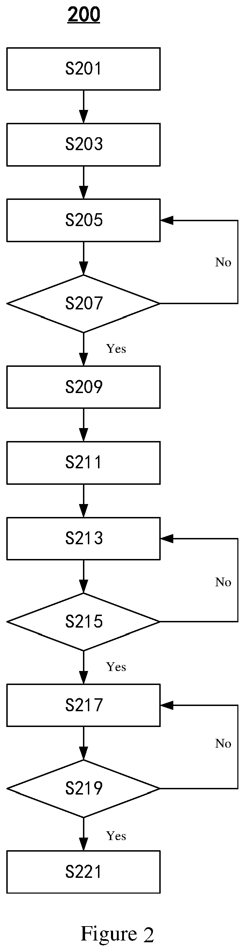

FIG. 2 illustrates a flow chart of a method 200 for vehicle warning according to an embodiment of the present invention. The method 200 comprises steps S201-S221. In this embodiment, the risk area is a gas station, and the marker feature is a gas station marker feature.

A method of performing vehicle warning based on a gas sensor and a camera when a vehicle is driving close to or has already entered a gas station will be described in detail with reference to the embodiment shown in FIG. 2. For example, whether the vehicle has entered the gas station is detected based on the gas sensor and the camera. Preferably, after the gas sensor and camera detects that the vehicle has entered the gas station, the vehicle occupant (e.g., the driver) is reminded to note the above-mentioned dangers and problems to perform safety warning reminding in preparation for refueling or during refueling. However, the safety reminding opportunity is not limited to the time when the driver is preparing for refueling or during the refueling, and may be described as stated in the preceding text (not described in detail any more in the present embodiment).

In view of these dangers and problems mentioned above, the method 200 implements an innovative vehicle warning and recognition approach which may be used to accurately detect and confirm the time when the vehicle enters the gas station, and which aims to improve safety and recognition efficiency by a technology that skillfully combines the gas sensor and camera (e.g., a high-precision vision camera) outside the vehicle.

First, the method 200 detects the gasoline concentration in the surrounding environment with the gas sensors mounted outside the vehicle. Once these sensors detect that the gasoline concentration exceeds a preset safety threshold, the camera will be activated immediately to begin to carefully observe the environment around the vehicle.

Then, the camera will pay special attention to markers specific to those gas stations, such as fuel dispensers. When the camera recognizes these gas station marker features, it can accurately determine that the vehicle has already approached or entered the gas station area. In addition, when the sizes of these markers gradually become larger in the image captured by the camera but do not exceed a preset threshold, it can be further determined that the vehicle is driving towards the inside of the gas station.

Most crucially, when the size of the gas station marker in the image exceeds another preset threshold, it is determined that the vehicle has already safely entered the gas station and is ready to start refueling. At this time, the method 200 automatically reports the detection result to a vehicle central control system or a vehicle warning system. Then, the vehicle warning system may send a safety reminder message for warning to remind the vehicle or the vehicle occupant (i.e., the driver) to notice relevant safety issues and potential hazards, e.g., avoid the occurrence of the fire source and static electricity, avoid using a mobile phone, shut down the engine, etc. as mentioned above.

In general, in the present embodiment, the safety standard of the gas station may be greatly improved, and the safety of the driver and occupants may be ensured by determining whether the vehicle enters the gas station scenario according to the detection result of the gas sensor and camera and the size of the gas station marker in the image.

Specifically, in step S201, acquisition of environmental odor data may be performed. Specifically, a plurality of gas sensors are mounted at key positions (e.g., a front bumper, and sides) of the vehicle, specifically for detecting and analyzing the gas composition in the environment, particularly gasoline vapor. These sensors exhibit high sensitivity and a quick response time to accurately capture gas changes in the environment.

In step S203, odor data preprocessing may be performed. Specifically, the collected gas data first undergoes a denoising process to remove the impact of environmental factors (e.g., the temperature and humidity) on the sensor readings. Then, a normalization process is performed on the data to ensure that the data is comparable under different environments and conditions.

In step S205, a specific calculation of the odor data may be performed. Specifically, an advanced chemical analysis algorithm, such as a gas chromatography analysis algorithm, is used to accurately calculate proportions of various components in a gas sample, particularly to accurately measure a gasoline vapor concentration for subsequent analysis and judgment.

In step S207, a determination of a gasoline odor threshold may be performed. Specifically, a safety threshold is set; when the gasoline vapor concentration detected by the gas sensor exceeds this threshold, it is believed that there is a potential danger in the environment, and the process proceeds to step S209. This threshold should be set based on a safety standard and experimental data. On the contrary, if the gasoline vapor concentration detected by the gas sensor does not exceed the threshold, the process returns to step S205.

In step S209, image data acquisition may be performed using the cameras. Specifically, after it is determined that the gasoline vapor concentration exceeds the threshold, the cameras of the vehicle, especially the cameras in front of and on the sides of the vehicle, are activated immediately. These cameras should be capable of capturing high-definition videos or still images for subsequent image analysis.

In step S211, image data preprocessing may be performed. Specifically, image data captured by the cameras are pre-processed, including adjusting contrast and brightness, removing noise points, deblurring, etc. to improve image quality, to ensure that the processed image is clear and help recognize the object in the image.

In step S213, application of a target detection algorithm may be performed. Specifically, an efficient target detection algorithm, such as a deep learning based convolutional neural network (CNN), is employed to identify and classify various objects in the image, particularly to accurately identify the markers (such as a fuel dispenser and a company identification) unique to the gas station.

In step S215, detection of the gas station marker feature may be performed. Specifically, when the marker of the gas station is detected through image analysis, the algorithm may determine that the vehicle has approached or entered the scope of the gas station. At this time, this event is recorded, and the specific position of the vehicle is further analyzed according to the type and position of the marker, and the process proceeds to step S217. On the contrary, if the marker of the gas station is not detected, the process returns to step S213.

In step S217, an analysis of changes in sizes of the markers may be performed. Specifically, the changes in the sizes of the gas station markers in the image are continuously monitored. If these markers become gradually larger in successive image frames but do not exceed a preset threshold, it is determined that the vehicle is traveling towards the inside of the gas station.

In step S219, a determination of preparation for refueling the vehicle may be performed. Specifically, when the vehicle stops moving and the cameras display that the sizes of the gas station markers exceed the preset threshold, it is determined that the vehicle has stopped in the gas station in preparation for refueling. At this time, the stop state and time of the vehicle are recorded to prepare for the refueling process, and the process proceeds to step S221. On the contrary, if the vehicle does not stop moving or the cameras show that the sizes of the gas station markers do not exceed the preset threshold, the process returns to step S217.

In step S221, result reporting and safety warning may be performed. Specifically, when all the above steps are completed, a detection result is reported to the vehicle central control system or the vehicle warning system. At the same time, a safety warning is issued to the vehicle or the vehicle occupant (e.g., the driver) to remind the vehicle or occupant to notice potential dangers and take corresponding measures, e.g., shut down the engine, avoid using a mobile phone, pay attention to static electricity and a fire source, etc. to ensure safety during the refueling process.

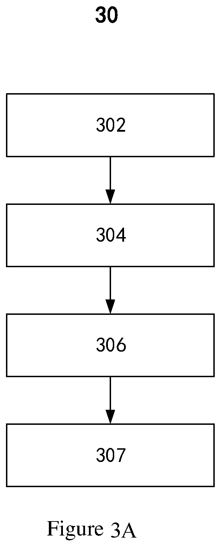

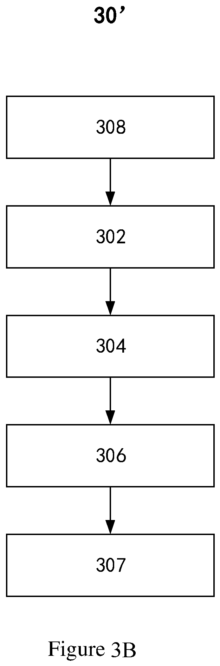

FIG. 3A illustrates a block diagram of a system 30 for vehicle warning according to an embodiment of the present invention; and FIG. 3B illustrates a block diagram of a system 30' for vehicle warning according to another embodiment of the present invention.

Referring to FIG. 3A, the system 30 may at least comprise a first acquisition module 302, a detection module 304, a first determination module 306, and a control module 307. The first acquisition module 302 may comprise at least one image sensor.

In one embodiment, the first acquisition module 302 is configured to acquire an image of the surrounding of the vehicle. The detection module 304 is configured to detect a marker feature from the acquired image. The first determination module 306 is configured to analyze the marker feature to determine whether the vehicle has entered the risk area. The control module 307 is further configured to send a safety reminder message to the vehicle or vehicle occupant when it is determined that the vehicle has entered the risk area.

In one embodiment, the system 30 may further comprise a second acquisition module (not shown). The second acquisition module is further configured to acquire other environmental information around the vehicle, the other environmental information including a target gas concentration, a sound volume, a temperature, or a humidity around the vehicle. The second acquisition module may comprise at least a gas sensor (such as an odor sensor), a sound sensor, a temperature sensor or a humidity sensor.

Referring to FIG. 3B, in one embodiment, the system 30' may comprise a second determination module 308 in addition to the first acquisition module 302, the detection module 304, the first determination module 306, and the control module 307 illustrated in FIG. 3A. The second determination module 308 is configured to compare the other environmental information with a corresponding threshold, and, in response to the other environmental information being greater than the corresponding threshold, to activate the first acquisition module 302 to acquire the image of the surrounding of the vehicle such that the detection module next performs the detection of marker feature from the acquired image.

In one embodiment, the first determination module 306 may be further configured to: determine that the vehicle is traveling close to the risk area when the proportion of the size of the detected marker in the image acquired in real time becomes gradually larger but has not exceeded a preset threshold; and determine that the vehicle has entered the risk area when the proportion of the size of the detected marker in the image acquired in real time exceeds the preset threshold.

The system for vehicle warning described herein may be analogously extended using the method for vehicle warning of any of the above implementations or embodiments, and will not be described in detail any longer herein.

Advantageously, the method for vehicle warning based on the first acquisition module (e.g., a camera) and the second acquisition module (e.g., an environmental sensor such as a gas sensor arranged outside the vehicle) has the following advantages in various aspects:
- Improved safety: the risk of accidents caused by fuel vapor leaks or other hazardous conditions is reduced by issuing a warning before the vehicle enters the risk environment (such as a gas station or a charging station), by promptly detecting situations such as excessive concentrations of gasoline vapor or incidents of unexpected ignition or electrical leakage;
- Accuracy and reliability: the method of combining the first acquisition module and the second acquisition module improves the accuracy and reliability of identification, which is crucial for ensuring the safe and smooth operation inside the energy supplement station;
- Preventative measures and warnings: the driver or vehicle occupant can be immediately reminded to take a safety measure when a potential hazard is detected, for example, shut down the engine, avoid using a mobile phone, etc. if necessary, to prevent possible accidents.

In addition, the method for vehicle warning described above can be applied to various currently-existing or future products, for example:
- An intelligent vehicle safety system: the technology involving this method is integrated into a safety system of an intelligent vehicle, to automatically remind the driver to take care upon approaching the gas station or charging station. This is particularly useful for an autonomous vehicle and may serve as part of its security protocol.
- An emergency response system: the technology involving this method may be combined with a fire-fighting and emergency response system to improve response speed and efficiency to a potential fire or chemical leak at the gas station or charging station.

To sum up, the method for vehicle warning based on the first acquisition module and the second acquisition module has a wide application potential, and can improve the safety, environmental sustainability and vehicle passage efficiency of a risk area in multiple fields.

Another aspect of the present invention provides a vehicle comprising the system for vehicle warning described above. The vehicle may be an internal combustion engine vehicle using an internal combustion engine as a drive source, an electric vehicle or a fuel cell vehicle using an electric motor as a drive source, or a hybrid vehicle using both the internal combustion engine and the electric motor as drive sources.

Another aspect of the present invention provides a computer device comprising a memory and a processor, the memory having stored thereon computer instructions which, when executed by the processor, cause the method for vehicle warning as hereinbefore described to be executed. The computer device may be, in a broad sense, a server, an in-vehicle terminal, or any other electronic device having necessary computing and/or processing capabilities. In one embodiment, the computer device may comprise a processor, a memory, a network interface, a communications interface, etc. connected via a system bus. The processor of the computer device may be used to provide necessary computing, processing and/or control capabilities. The memory of the computer device may include a non-volatile storage medium and an internal memory. An operating system, a computer program, etc. may be stored in or on the non-volatile storage medium. The internal memory may provide an environment for the operation of the operating system and the computer program in the non-volatile storage medium. The network interface and communication interface of the computer device may be used to connect and communicate with an external device via a network. The computer program, when executed by the processor, is capable of implementing the steps of the method for vehicle warning according to the present invention.

Another aspect of the present invention also provides a computer-readable storage medium having stored thereon a computer program which, when executed by a processor, implements the method for vehicle warning according to any of the above implementations or embodiments.

It may be appreciated by those having ordinary skill in the art that all or part of the steps of the above-described method for vehicle warning may be performed by a relevant hardware such as a computer device or processor under instruction of a computer program, where the computer program may be stored in a non-transitory computer-readable storage medium and, when executed, causes the steps of the method for vehicle warning of the present invention to be performed. Any reference herein to a memory, a storage, a database, or other media herein may include non-volatile and/or volatile memory, depending on circumstances. Examples of the nonvolatile memory include a Read Only Memory (ROM), a Programmable ROM (PROM), an Electrically Programmable ROM (EPROM), an Electrically Erasable Programmable ROM (EEPROM), a flash memory, a magnetic tape, a floppy disk, a magneto-optical data storage device, an optical data storage device, a hard disk, a solid state disk, and the like. Examples of the volatile memory include a Random Access Memory (RAM), an external cache memory, and the like.

The above depictions of illustrated implementations or embodiments of the present invention, including what is described in the Abstract, are not intended to be exhaustive or to limit the present invention to the precise forms disclosed. While specific implementations or embodiments of the present invention are described herein for illustrative purposes, various equivalent modifications are possible without departing from the broader spirit and scope of the present invention.

## Claims

1. A method (100, 100', 200) for vehicle warning, wherein the method comprises:
acquiring an image of the surrounding of a vehicle;
detecting a marker feature from the acquired image;
analyzing the marker feature to determine whether the vehicle has entered a risk area; and
sending a safety reminder message to the vehicle or a vehicle occupant when it is determined that the vehicle has entered the risk area.

2. The method (100, 100', 200) according to claim 1, wherein the method further comprises acquiring other environmental information around the vehicle, the other environmental information including a target gas concentration, a sound volume, a temperature, or a humidity around the vehicle.

3. The method (100') according to claim 2, wherein the method further comprises:
comparing the other environmental information with a corresponding threshold; and
in response to the other environmental information being greater than the corresponding threshold, activating a first acquisition module to acquire the image of the surrounding of the vehicle such that the detection of the marker feature from the acquired image is next performed.

4. The method (100, 100', 200) according to claim 1, wherein the marker feature at least comprises a size of a marker characterizing the risk area in the image, and the method further comprises:
determining that the vehicle is traveling close to the risk area when a proportion of the size of the detected marker in the acquired image becomes gradually larger but has not exceeded a preset threshold; and
determining that the vehicle has entered the risk area when the proportion of the size of the detected marker in the acquired image exceeds the preset threshold.

5. The method (100, 100', 200) according to any of claims 1-4, wherein the risk area comprises an energy replenishment station, a chemical storage area or a high-voltage area, and the marker feature comprises an energy replenishment station marker feature, a chemical marker feature or a high-voltage marker feature.

6. The method (100, 100', 200) according to claim 5, wherein the safety reminder message comprises reminding the vehicle or the vehicle occupant to avoid occurrence of a fire source and static electricity, avoid using a mobile phone, close windows and/or shut down an engine if necessary.

7. A system (30, 30') for vehicle warning, wherein the system comprises:
a first acquisition (302) module configured to acquire an image of the surrounding of a vehicle;
a detection module (304) configured to detect a marker feature from the acquired image;
a first determination module (306) configured to analyze the marker feature to determine whether the vehicle has entered a risk area; and
a control module (307) configured to send a safety reminder message to the vehicle or a vehicle occupant when it is determined that the vehicle has entered the risk area.

8. The system (30, 30') according to claim 7, wherein the system (30, 30') further comprises a second acquisition module configured to acquire other environmental information around the vehicle, the other environmental information including a target gas concentration, a sound volume, a temperature, or a humidity around the vehicle.

9. The system (30') according to claim 8, wherein the system further comprises a second determination module (308) configured to:
compare the other environmental information with a corresponding threshold; and
in response to the other environmental information being greater than the corresponding threshold, activate the first acquisition module (302) to acquire the image of the surrounding of the vehicle such that the detection module (304) next performs the detection of marker feature from the acquired image.

10. The system (30, 30') according to claim 7, wherein the marker feature at least comprises a size of a marker characterizing a risk in the image, and the first determination module (306) is further configured to:
determine that the vehicle is traveling close to the risk area when a proportion of the size of the detected marker in the acquired image becomes gradually larger but has not exceeded a preset threshold; and
determine that the vehicle has entered the risk area when the proportion of the size of the detected marker in the acquired image exceeds the preset threshold.

11. The system (30, 30') according to any of claims 7-10, wherein the risk area comprises an energy replenishment station, a chemical storage area or a high-voltage area, and the marker feature comprises an energy replenishment station marker feature, a chemical marker feature or a high-voltage marker feature.

12. The system (30, 30') according to claim 10, wherein the safety reminder message comprises reminding the vehicle or the vehicle occupant to avoid occurrence of a fire source and static electricity, avoid using a mobile phone, close windows and/or shut down the engine if necessary.

13. A vehicle, comprising the system (30, 30') for vehicle warning according to any of claims 7-12.

14. A computer device comprising a memory and a processor, the memory having stored thereon computer instructions which, when executed by the processor, cause the method (100, 100', 200) for vehicle warning according to any of claims 1-6 to be executed.

15. A non-transitory computer-readable storage medium having stored thereon a computer program, wherein the computer program, when executed by a processor, causes the method (100, 100', 200) for vehicle warning according to any of claims 1-6 to be executed.
